# EUROPÄISCHE PATENTSCHRIFT

(11) **EP 2 085 212 B1**
(45) Veröffentlichungstag und Bekanntmachung des Hinweises auf die Patenterteilung: **18.04.2012**
(21) Anmeldenummer: 09150762.4
(22) Anmeldetag: 16.01.2009
(51) Int. Cl.: B32B 3/24, B32B 3/28, B32B 3/30, B32B 27/12

(54) **Mehrlagiges faserverstärktes Thermoplast-Flachmaterial sowie Verfahren zu seiner Herstellung**
Multilayer reinforced fibre thermoplastic flat material and method for production of same
Matériau plat thermoplastique multicouche renforcé par des fibres et son procédé de fabrication

(30) Priorität: 31.01.2008 DE 102008008198
(43) Veröffentlichungstag der Anmeldung: 05.08.2009
(73) Patentinhaber: Deutsches Zentrum für Luft- und Raumfahrt e.V., 51147 Köln (DE)
(72) Erfinder: Keck, Rüdiger, 74081 Heilbronn (DE)
(74) Vertreter: Hoeger, Stellrecht & Partner Patentanwälte

(56) Entgegenhaltungen:
- EP-A- 1 338 406
- WO-A-02/088231
- DATABASE WPI Week 200307 Thomson Scientific, London, GB; AN 2003-070026 XP002520114 & JP 2002 249605 A (TORAY IND INC) 6. September 2002 (2002-09-06)

## Beschreibung

Die Erfindung betrifft ein mehrlagiges faserverstärktes Thermoplast-Flachmaterial zur Herstellung eines für die Produktion faserverstärkter Thermoplast-Bauteile vorgesehenen mehrschichtigen Thermoplast-Rohmaterials, von dessen miteinander verbundenen Schichten mindestens eine von dem faserverstärkten Thermoplast-Flachmaterial gebildet wird, das eine Faserlage enthält, welche an mindestens einer ihrer Seiten mit einer mindestens überwiegend aus einem thermoplastischen Material bestehenden Decklage beschichtet ist. Ein solches Flachmaterial wird häufig als Semipreg bezeichnet.

Ferner betrifft die Erfindung ein aus mehreren Schichten des genannten Flachmaterials hergestelltes Rohmaterial sowie Verfahren zur Herstellung des Flachmaterials und des Rohmaterials.

Bei der Produktion von faserverstärkten Thermoplast-Bauteilen kommt häufig ein flächiges mehrschichtiges Rohmaterial zum Einsatz, das aus mindestens zwei miteinander verbundenen Semipreg-Schichten besteht, welche mittels ihrer thermoplastischen Decklagen miteinander verschweißt oder verklebt sind; dabei werden diese Semipreg-Schichten miteinander zu dem plattenartigen Rohmaterial verpresst, das durch Zuschneiden und Umformen zu Thermoplast-Bauteilen weiterverarbeitet wird. Im Folgenden wird ein bei der Herstellung des Rohmaterials auftretendes Problem anhand von Semipregs erläutert, deren Faserlage beidseitig mit einer Decklage versehen ist, dieses Problem kann aber auch bei der Verarbeitung von Semipregs mit nur einer Decklage auftreten, wenn deren Faserlage nicht luftdurchlässig ist, z. B. aufgrund eines Bindemittels, mit dem das Fasermaterial getränkt wurde.

Bei der Herstellung eines aus mehreren Flachmaterial-(Semipreg)-Schichten bestehenden Rohmaterials besteht das Problem, dass beim Aufeinanderlegen und Verbinden der vorgenannten Flachmaterialschichten Lufteinschlüsse zwischen diesen Schichten nur schwer vermieden werden können, weil im Innern des mehrschichtigen Rohmaterials liegende Decklagen einander benachbarter Flachmaterialschichten glatte Oberflächen aufweisen, so dass zwischen diesen Decklagen eingeschlossene Restluftmengen im verpressten Rohmaterial und damit auch in den aus diesem hergestellten Bauteilen verbleiben. Dies trifft auch auf Rohmaterial der in Rede stehenden Art zu, bei dessen Herstellung die vorstehend erwähnten Flachmaterialschichten in einem Autoklaven oder einer beheizten Presse zusammengepresst und aufgrund des thermoplastischen Materials der Decklagen der Schichten miteinander verbunden werden. Zwischen einander benachbarten Decklagen von einander benachbarten Flachmaterialschichten verbleibende Restluftmengen werden dabei zwar auf ein Minimum zusammengepresst, so dass in einem Schliffbild oder einem Ultraschallbild kaum Fehlstellen in der Verbindung zwischen einander benachbarten Schichten sichtbar sind; beim Erwärmen eines aus einem solchen Rohmaterial hergestellten Bauteils bis in die Nähe des Schmelzpunktes des thermoplastischen Materials der Decklagen dehnen sich jedoch die mit den komprimierten Restluftmengen gefüllten Poren aus und führen zu einer Veränderung des Gefüges und damit der Qualität des Bauteils.

Aus der WO 02/088231 A1 ergibt sich ein mehrlagiges faserverstärktes Thermoplast-Flachmaterial zur Herstellung faserverstärkter Bauteile aus mehreren miteinander verbundenen Schichten dieses Thermoplast-Flachmaterials. Letzteres enthält eine kontinuierliche, nicht-perforierte Faserlage, welche beidseitig mit einer diskontinuierlichen Decklage aus thermoplastischem Material beschichtet ist; jede Decklage besteht dabei beispielsweise aus im Abstand voneinander angeordneten streifenförmigen oder plättchenförmigen Auflagen aus dem thermoplastischen Material. Wenn mehrere Lagen dieses Flachmaterials aufeinandergeschichtet und dann in einer Form miteinander verbunden und konsolidiert werden, sollen Lufteinschlüsse zwischen den Lagen dadurch vermieden werden, dass Luft über die nicht mit einer Auflage versehenen Regionen zu den Rändern des mehrlagigen Produkts entweicht.

Aus der EP 1 338 406 A ergibt sich ein ähnliches mehrlagiges faserverstärktes Thermoplast-Flachmaterial, welches sich von demjenigen gemäß der WO 02/088231 A1 dadurch unterscheidet, dass die eine der beiden thermoplastischen Decklagen keine diskontinuierliche, sondern eine geschlossene Decklage ist - die andere Decklage weist Entlüftungsöffnungen auf, welche Entlüftungskanäle bilden können.

Schließlich ergibt sich aus der JP 2002-249605 A ein mehrlagiges faserverstärktes Thermoplast-Flachmaterial ähnlich dem in der WO 02/088231 A offenbarten Flachmaterial, dessen beide diskontinuierlichen thermoplastischen Decklagen Entlüftungskanäle bilden können. In der JP 2002-249605 A wird offenbart, dass eine thermoplastische Decklage auch als Film auf die Faserlage laminiert werden kann.

Der Erfindung lag die Aufgabe zugrunde, ein Flachmaterial der eingangs erwähnten Art so zu verbessern, dass im aus mehreren Flachmaterialschichten hergestellten Rohmaterial zwischen einander benachbarten und miteinander verbundenen Flachmaterialschichten keine Lufteinschlüsse vorhanden oder zumindest deutlich geringere Restluftmengen eingeschlossen sind als bei Verwendung bekannter Flachmaterialien der eingangs erwähnten Art.

Diese Aufgabe lässt sich erfindungsgemäß dadurch lösen, dass mindestens eine Decklage aus einer Folie oder einer auf die Faserlage aufgetragenen Beschichtungsmasse öffnungslos und mindestens an ihrer von der Faserlage abgewandten Seite mit Entlüftungsmitteln in Form von zu mindestens einem Rand des Flachmaterials führenden Entlüftungskanälen versehen ist. Bei der Herstellung eines Rohmaterials aus mehreren Schichten eines mehrlagigen faserverstärkten Thermoplast-Flachmaterials können dann Lufteinschlüsse zwischen der mit den Entlüftungskanälen versehenen Decklage des erfindungsgemäßen Flachmaterials und einer benachbarten Flachmaterialschicht über diese Entlüftungskanäle zum Rand des Rohmaterials hin entweichen und dieses dort verlassen, ohne dass die eingeschlossene Luft durch die Faserlage hindurch zu den Rändern des Rohmaterials verdrängt werden muss, um aus dem Rohmaterial zu entweichen

Nur der Vollständigkeit halber wird noch auf folgenden Stand der Technik verwiesen:

Aus der EP-1 013 414-A ergibt sich eine Sandwich-Platte mit einer Kernschicht aus Polyurethan-Schaum, einem Gewebe bzw. Gestrick oder einem Faservlies, sowie mit zwei Semipreg-Schichten, zwischen welchen die Kernschicht angeordnet ist. Jede der Semipreg-Schichten besteht aus einer zwischen zwei thermoplastischen Polymerlagen angeordneten Faserlage und ist mittels einer thermoplastischen Klebstofflage mit der Kernschicht verbunden. Damit die Sandwich-Platte ein gutes Schalldämmvermögen aufweist, sind die Semipreg-Schichten und die Klebstofflagen perforiert.

Aus der DE-603 11 580-T2 ergibt sich ein unter Vakuum konsolidiertes Sandwich-Bauteil mit mehreren aufeinandergeschichteten Semipreg-Schichten, deren jede eine mit einem Harz nicht vollständig getränkte Faserlage besitzt, auf deren beiden Seiten jeweils eine mit einem Harz vollständig getränkte Faserlage und darüber eine reine Harzlage angeordnet sind. Beim Konsolidieren des Sandwich-Bauteils unter Vakuum soll die Luft aus zwischen einander benachbarten Semipreg-Schichten vorhandenen Lufteinschlüssen in die nur teilweise mit Harz imprägnierten Faserlagen verdrängt und durch diese hindurch aus dem Sandwich-Bauteil abgezogen werden.

In der EP-1 902 830-A wird ein thermoplastisch verformbares Sandwich-Flachmaterial beschrieben, welches eine Faserlage aus einem Nadelvlies aus thermoplastischen sowie aus Verstärkungsfasern aufweist, welches auf seiner einen Seite mit einem hydrophobierten Polymerfaservlies und auf seiner anderen Seite gleichfalls mit einem hydrophobierten Polymerfaservlies oder einer Thermoplastfolie beschichtet ist, wobei zur Herstellung des Sandwich-Flachmaterials die Faserlage und ihre Beschichtungen gemeinsam heiß verpresst werden. Durch diesen Aufbau soll bei aus dem Sandwich-Flachmaterial hergestellten Kraftfahrzeug-Formteilen eine Wasseraufnahme durch das Sandwich-Flachmaterial und eine gute Beständigkeit der Formteile gegen Steinschlag erreicht werden.

Aus der WO 03/086748-A ergibt sich eine beschussfeste Platte in SandwichBauweise, bei deren Herstellung Decklagen und dazwischen angeordnete Zwischenlagen unter Vakuum konsolidiert werden. Die Decklagen bestehen aus einem faserverstärkten thermoplastischen Material, und bei den Zwischenlagen handelt es sich abwechselnd um beschussfeste Gewebe und Klebefolien, wobei letztere verhindern sollen, dass thermoplastisches Material der Decklagen, welches beim Konsolidieren der Platte die Hohlräume der Decklagen ausfüllen soll, in die Gewebelagen eindringt.

Schließlich ergibt sich aus der DE-601 05 831-T2 ein Sandwich-Flachmaterial mit einer Kernlage, bestehend aus einem Harz und hohlen Füllstoffpartikeln, zwei zu beiden Seiten der Kernlage an diese angrenzenden Harzlagen und beidseitig vorgesehenen Fasermaterial-Decklagen. Bei der Verarbeitung dieses Sandwich-Flachmaterials sollen Gase aus der Kernlage durch die Harzlagen und die Fasermaterial-Decklagen hindurch entweichen können.

Besonders effektiv ist die vorliegende Erfindung im Falle der Herstellung eines Rohmaterials aus Flachmaterialschichten, deren Faserlage beidseitig mit einer mindestens überwiegend aus einem thermoplastischen Material bestehenden Decklage beschichtet ist, da im Rohmaterial gegeneinander anliegende glatte Decklagen Lufteinschlüsse begünstigen.

Die Vorteile des erfindungsgemäßen Flachmaterials sind nicht nur in der Minimierung oder gar Vermeidung von Lufteinschlüssen im fertigen Rohmaterial zu sehen, sondern auch darin, dass zur Konsolidierung des bei der Herstellung des Rohmaterials aus dessen Flachmaterialschichten gebildeten Pakets nicht ein Autoklav oder eine beheizte Presse verwendet werden muss, um Lufteinschlüsse zu komprimieren, sondern dass dieses Schichtenpaket ohne einen zusätzlichen Druck von außen insbesondere unter Vakuum konsolidiert werden kann und dabei die Schichten fest miteinander verbunden werden können.

Untersuchungen an aus erfindungsgemäßen Flachmaterialschichten hergestelltem Rohmaterial ergaben, dass im Vergleich zu den geschilderten bekannten Rohmaterialien der Gehalt an luftgefüllten Poren zumindest deutlich geringer ist, was zum Beispiel Ultraschallbilder erfindungsgemäßer Rohmaterialien deutlich machen.

Hinsichtlich der Minimierung beziehungsweise Vermeidung von Lufteinschlüssen im erfindungsgemäßen Rohmaterial ist es vorteilhaft, beide Decklagen einer Flachmaterial-Faserlage mit erfindungsgemäßen Entlüftungsmitteln zu versehen. Lufteinschlüssen zwischen zwei im Innern des Rohmaterials liegenden Decklagen stehen dann mehrere Entlüftungspfade zur Verfügung.

Eine mindestens überwiegend aus einem thermoplastischen Material bestehende Decklage, die auch aus einem mit Füllstoffpartikeln versehenen thermoplastischen Material oder aus einem Kurzfaser-verstärkten thermoplastischen Material bestehen kann, lässt sich auf unterschiedliche Weise auf einer Faserlage anbringen. So lässt sich Decklagenmaterial, welches zunächst in pastöser oder zähflüssiger Form vorliegt, beispielsweise auf die Faserlage aufwalzen, aufspritzen oder aufpressen. Bevorzugt werden jedoch Ausführungsformen, bei denen die Decklage bzw. mindestens eine der Decklagen in Form einer mit Entlüftungskanälen versehenen Folie auf der benachbarten Faserlage angeordnet ist. Eine solche Folie kann dann vor dem Aufbringen auf die Faserlage auf einfache Weise mit Entlüftungskanälen versehen werden, und zwar entweder nur auf einer Seite der Folie, gegebenenfalls aber auch auf beiden Seiten der Folie.

Bei bekannten Flachmaterialien der eingangs erwähnten Art werden zur Bildung der Decklagen Folien mit thermoplastischen Eigenschaften häufig im heißen Zustand auf die Faserlagen aufgewalzt und so mit diesen fest verbunden. Damit eine der Abführung von Lufteinschlüssen dienende Faserlage in der von letzterer definierten Ebene gasdurch-lässig bleibt, sieht die Erfindung bei bevorzugten Ausführungsformen des erfindungsgemäßen Flachmaterials vor, dass eine Folie lediglich mit denjenigen Fasern der benachbarten Faserlage verbunden ist, welche an der Oberfläche der Faserlage liegen oder dieser Oberfläche unmittelbar benachbart sind, und zwar so, dass durch die Verbindung der Folie mit der Faserlage deren Oberfläche mindestens überwiegend gasdurchlässig bleibt.

Da die übereinander angeordneten Schichten eines erfindungsgemäßen Rohmaterials über ihre Decklagen unmittelbar fest miteinander verbunden sein sollen, empfehlen sich Ausführungsformen des erfindungsgemäßen Rohmaterials, bei denen die thermoplastischen Materialien der Decklagen durch Erhitzen miteinander verklebbare oder verschweißbare Materialien sind, da sich dann die Schichten auf einfache Weise vollflächig fest miteinander verbinden lassen. Besonders vorteilhaft ist es dabei, wenn die thermoplastischen Materialien aller miteinander verbundenen Decklagen identisch sind.

Es werden Ausführungsformen bevorzugt, bei denen die der Entlüftung dienende Decklage mindestens an ihrer von der Faserlage abgewandten Seite mit Entlüftungskanäle bildenden Einprägungen versehen ist, weil eine Folie schon vor dem Aufbringen auf eine Faserlage ohne Weiteres mit solchen Einprägungen versehen werden kann oder im Falle einer auf eine Faserlage aufgewalzten Decklage die Einprägungen im Zuge des Aufwalzens erzeugt werden können. Es könnte aber auch eine Folie verwendet werden, bei der es sich um ein Extrusionsprodukt handelt, bei dem zum Beispiel nutförmige Entlüftungskanäle schon beim Extrudieren der Folie erzeugt werden können.

Eine optimale Entlüftung durch Entlüftungskanäle ergibt sich dann, wenn die Decklage beidseitig mit Entlüftungskanälen, vorzugsweise in Form von Einprägungen, versehen ist. Dies gilt in Abhängigkeit von der Struktur beziehungsweise dem Muster der Entlüftungskanäle allerdings nur dann, wenn nicht die Gefahr besteht, dass zwei im Rohmaterial einander benachbarte Decklagen mit ihren einander zugekehrten Oberflächenstrukturen die Durchlässigkeit der Entlüftungskanäle beeinträchtigen.

Für eine optimale Entlüftung des erfindungsgemäßen Rohmaterials wird empfohlen, alle im Rohmaterial gegeneinander anliegenden Decklagen mit Entlüftungsmitteln zu versehen.

Es sei noch einmal darauf hingewiesen, dass nach dem Grundprinzip der vorliegenden Erfindung das Flachmaterial bzw. mindestens ein Teil der Decklagen der Schichten des Rohmaterials so gestaltet ist, dass beim Aufeinanderschichten der Flachmaterialschichten des Rohmaterials in diesem eingeschlossene Luft über die Entlüftungskanäle direkt nach außen ableitbar ist.

Bei der Faserlage eines erfindungsgemäßen Flachmaterials kann es sich um ein Gewebe, Gewirke, Faservlies, Fasergelege oder ein anderes Fasermaterial handeln, wobei Fasermaterialien bevorzugt werden, welche parallel zu einer von der Faserlage definierten Ebene sowie quer zu dieser Ebene gasdurchlässig sind.

Für ein erfindungsgemäßes Flachmaterial wird insbesondere eine mindestens im Wesentlichen ungefüllte Faserlage verwendet.

Besonders einfach wird die Herstellung eines eine Entlüftung ermöglichenden Flachmaterials dann, wenn zur Bildung mindestens einer später im Inneren des Rohmaterials liegenden Decklage eine Folie, welche mindestens auf ihrer von der benachbarten Faserlage abgewandten Seite mit Entlüftungskanälen versehen ist, im erwärmten Zustand auf die benachbarte Faserlage aufgetragen wird. Eine kostengünstige Fertigung lässt sich aber auch dadurch erzielen, dass an die Stelle der Verarbeitung einer Folie zur Bildung mindestens einer später im Inneren des Rohmaterials liegenden Decklage auf die benachbarte Faserlage eine mindestens überwiegend aus einem thermoplastischen Material bestehende Beschichtungsmasse aufgetragen und auf ihrer von der Faserlage abgekehrten Seite mit einer Entlüftungskanäle bildenden Oberflächenstruktur versehen wird; dies lässt sich besonders kostengünstig dadurch bewerkstelligen, dass die Beschichtung auf die Faserlage aufgewalzt und mittels einer entsprechend strukturierten Walze gleichzeitig mit der Entlüftungskanäle bildenden Oberflächenstruktur versehen wird.

Für einen guten Verbund der Flachmaterialschichten des Rohmaterials miteinander ist es von Vorteil, wenn die im Rohmaterial gegeneinander anliegenden Decklagen gegeneinander angelegt und im erhitzten Zustand miteinander verklebt oder verschweißt werden - das Verkleben thermoplastischer Schichten kann bei etwas geringeren Temperaturen erfolgen als das Verschweißen.

Weitere Merkmale und Vorteile der Erfindung ergeben sich aus den Unteransprüchen, der nachfolgenden Beschreibung sowie der beigefügten zeichnerischen Darstellung bevorzugter Ausführungsformen erfindungsgemäßer Flach- und Rohmaterialien; in der Zeichnung zeigen:
- Figur 1A: einen schematischen Schnitt durch einige Schichten eines bekannten mehrschichtigen faserverstärkten Thermoplast-Rohmaterials;
- Figur 1B: den Ausschnitt "S" in Figur 1A in größerem Maß- sta b;
- Figur 1C: eine Draufsicht auf das bekannte Flachmaterial mit schematisch dargstellten Lufteinschlüssen;
- Figuren 2A, 2B und 2C: Darstellungen eines aus Schichten eines nicht erfindungsgemäßen Flachmaterials aufgebauten Rohmaterials entsprechend den Figuren 1A, 1B und 1C;
- Figuren 3A, 3B und 3C: Darstellungen einer ersten Ausführungsform eines aus Schichten eines erfindungsgemäßen Flach- materials aufgebauten erfindungsgemäßen Roh- materials entsprechend den Figuren 1A, 1B und 1C, und
- Figur 4: einen Schnitt durch eine zweite Ausführungsform des erfindungsgemäßen Flachmaterials.

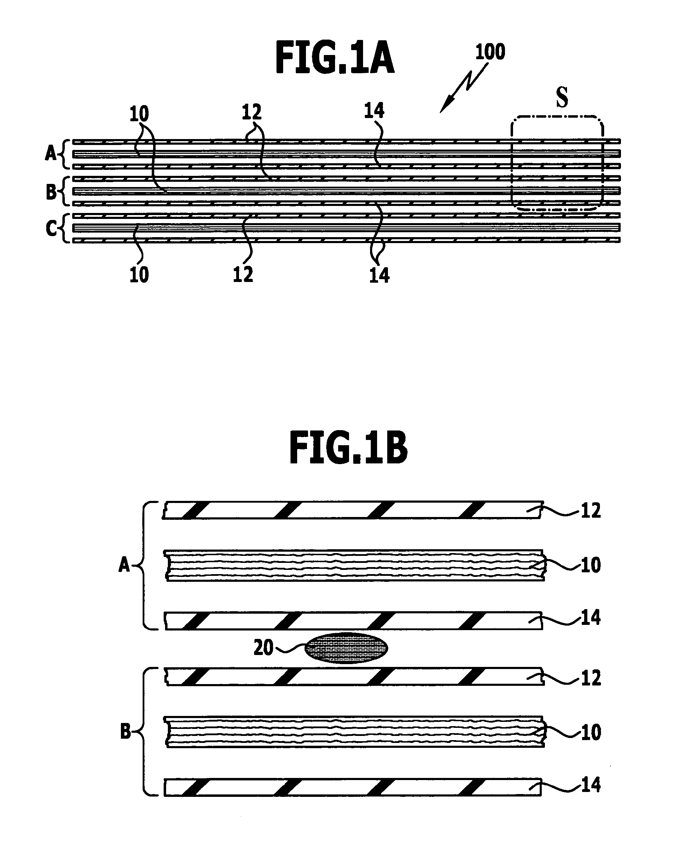

Die Figur 1A zeigt drei Schichten A, B und C eines bekannten Rohmaterials 100, dessen Schichten aus bekanntem Flachmaterial identisch aufgebaut sind und jeweils aus einer Faserlage 10 und zwei Decklagen 12 und 14 bestehen, zwischen denen die Faserlage 10 angeordnet ist. Bei der Faserlage 10 handelt es sich beispielsweise um ein Gewebe aus Multifilamenten, es könnte sich aber auch beispielsweise um ein Faservlies handeln, wie es für die Verstärkung thermoplastischer Bauteile verwendet wird. Bei den Decklagen 12 und 14 handelt es sich um thermoplastische Folien, welche mit der zugehörigen Faserlage 10 der Schicht A bzw. B bzw. C zum Beispiel durch Aufwalzen im erhitzen Zustand fest verbunden sind. Zur Herstellung des Rohmaterials wurden die Schichten A, B und C aufeinander gelegt und dann im erhitzen Zustand zum Beispiel in einer Heizpresse zusammengepresst, um gegeneinander anliegende Decklagen 12 und 14 und damit die Schichten A, B und C flächig und fest miteinander zu verbinden.

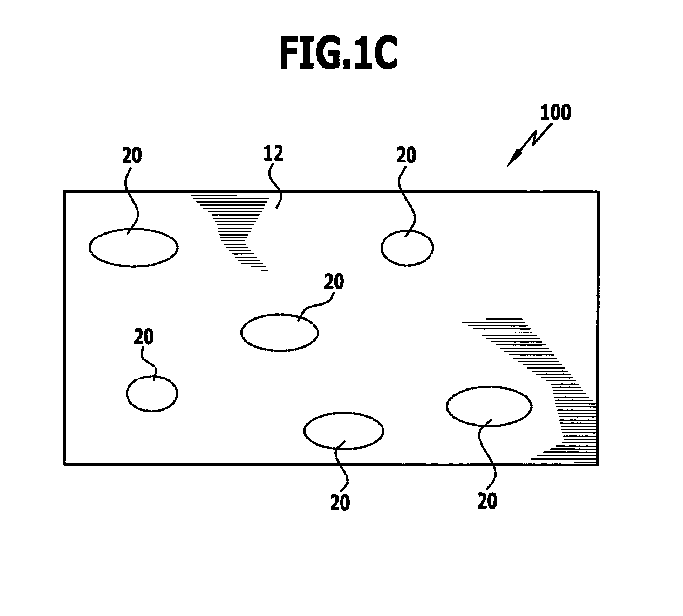

Wegen der beim bekannten Rohmaterial für die Herstellung der Decklagen 12 und 14 verwendeten glatten Folien kann Luft, welche beim Aufeinanderlegen der Flachmaterialschichten A, B und C zwischen einander anliegenden Decklagen 12 und 14 eingeschlossen wird, beim Anpressen der Schichten A, B und C gegeneinander und beim Verbinden dieser Schichten miteinander nicht vollständig entweichen, so dass in dem Verbund zwischen den miteinander verklebten bzw. verschweißten Decklagen 12 und 14 Restluftmengen in Form von Luftblasen verbleiben, von denen in Figur 1B nur eine einzige schematisch und stark vergrößert dargestellt und mit 20 bezeichnet wurde, und die Figur 1C zeigt mehrere solcher Luftblasen 20. In einer Heizpresse oder dergleichen werden beim Verbinden der Lagen A, B und C miteinander derartige Luftblasen 20 zwar stark komprimiert, sie bleiben jedoch durch das bis auf die Bereiche der Luftblasen vollständige flächige Verschweißen der Decklagen 12 und 14 miteinander im hergestellten Rohmaterial eingeschlossen, und wenn das Rohmaterial zum Beispiel bei der Herstellung eines Bauteils im erwärmten Zustand umgeformt wird, kann die Erwärmung bis in die Nähe des Schmelzpunktes der für die Decklagen verwendeten thermoplastischen Materialien dazu führen, dass durch die Ausdehnung der in den Luftblasen 20 enthaltenen komprimierten Luft im Zuge des Erwärmens im Verbund zwischen einander benachbarten Decklagen 12 und 14 Fehlstellen erheblicher Größe entstehen.

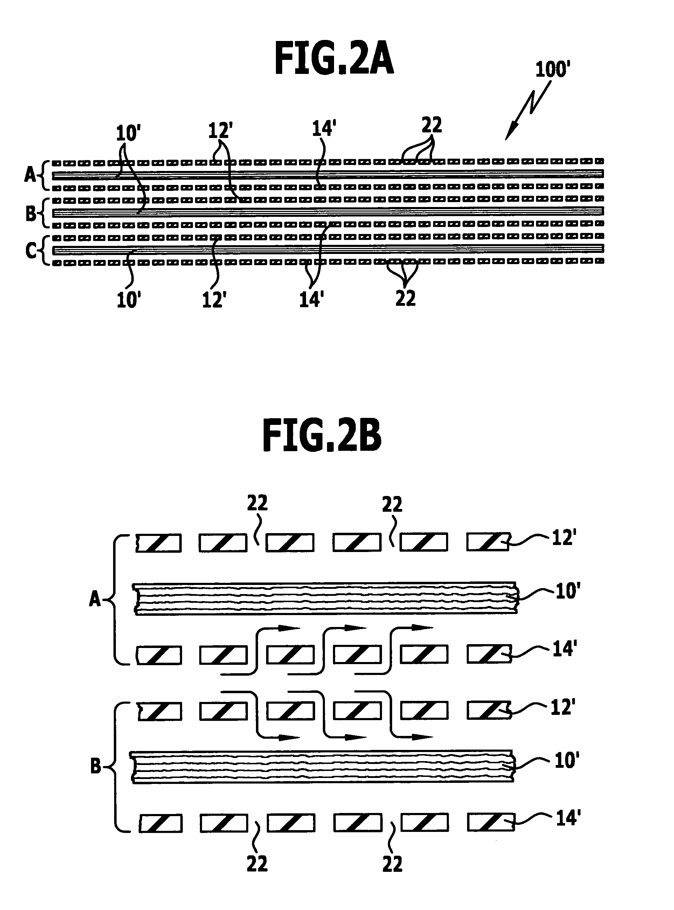

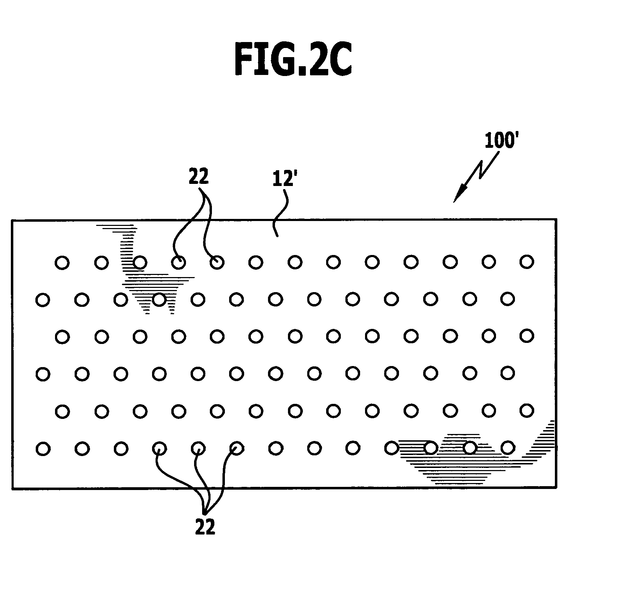

Bei der in den Figuren 2A, 2B und 2C dargestellten Ausführungsform eines nicht erfindungsgemäßen Rohmaterials 100' wurden für die Herstellung der im Inneren des Flachmaterials liegenden Decklagen 12' und 14' des Flachmaterials (Schichten A, B und C) perforierte thermoplastische Folien verwendet, so dass diese Decklagen 12' und 14' eine große Anzahl von Entlüftungsöffnungen 22 aufweisen. Zwischen einander benachbarten Decklagen 12' und 14' beim Aufeinanderlegen und Gegeneinanderanlegen der Schichten A, B und C zunächst vorhandene Lufteinschlüsse verschwinden im Zuge des Verklebens beziehungsweise Verschweißens einander benachbarter Decklagen 12' und 14' zumindest nahezu, da aus diesen Lufteinschlüssen die Luft über die Entlüftungsöffnungen 22 der Decklagen hindurch in die Faserlagen 10' entweichen und durch die Faserlagen hindurch zu den Rändern des Rohmaterials 100' abfließen kann. In diesem Zusammenhang sei bemerkt, dass beim Aufpressen der die Decklagen 12' und 14' bildenden Folien auf die Faserlagen 10' sich Lufteinschlüsse zwischen diesen Folien und den Faserlagen schon gar nicht bilden können, zum einen wegen der Entlüftungsöffnungen 22 der Folien und zum anderen wegen der Gasdurchlässigkeit der Faserlagen 10' parallel zu den von diesen Faserlagen definierten Ebenen sowie quer zu diesen Ebenen.

Damit die Faserlagen 10' gasdurchlässig bleiben, werden die die Decklagen 12' und 14' bildenden Folien im erhitzten Zustand nur so stark gegen die Faserlagen 10' angepresst, dass die Folien lediglich mit denjenigen Fasern der Faserlagen verbunden werden, welche an den Oberflächen der Faserlagen liegen oder diesen Oberflächen unmittelbar benachbart sind, und die Faserlagen luftdurchlässig bleiben.

In Figur 2B wurde durch Pfeile angedeutet, wie die Luft von zunächst zwischen einander benachbarten Decklagen 12' und 14' vorhandenen Lufteinschlüssen durch die Entlüftungsöffnungen 22 der für die Decklagen verwendeten Folien hindurch zu den benachbarten Faserlagen 10' entweichen und dann durch diese Faserlagen hindurch abströmen kann.

Anhand der Figur 2B wird auch ersichtlich, dass aus solchen Lufteinschlüssen Luft auch dann entweichen kann, wenn nur eine der beiden einander benachbarten Decklagen 12' und 14' Entlüftungsöffnungen 22 aufweist - es ist ja ausreichend, dass die Luft zu einer der beiden Faserlagen 10' hin entweichen und dann durch diese Faserlage abströmen kann.

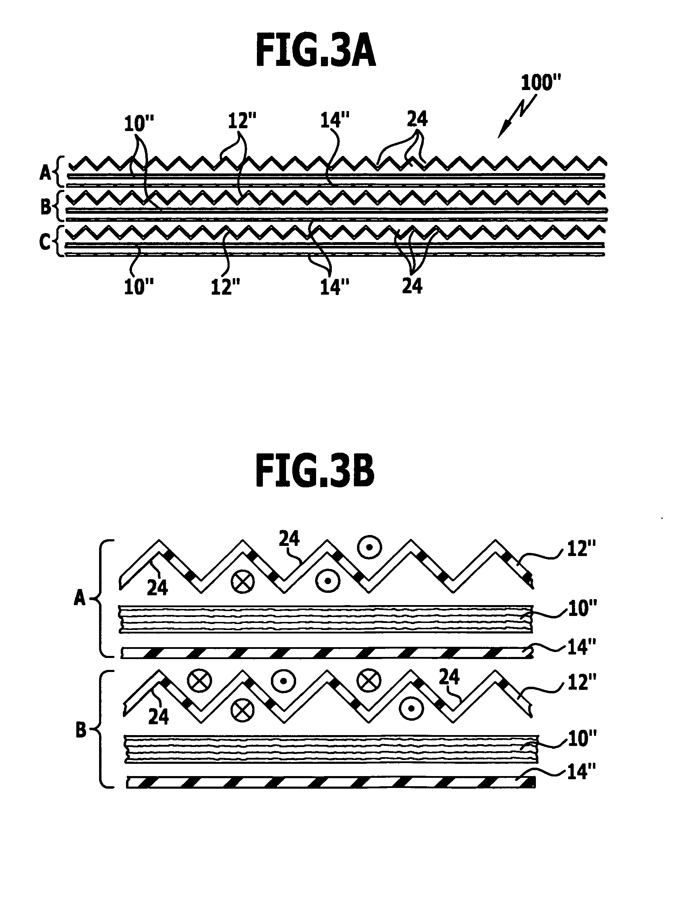

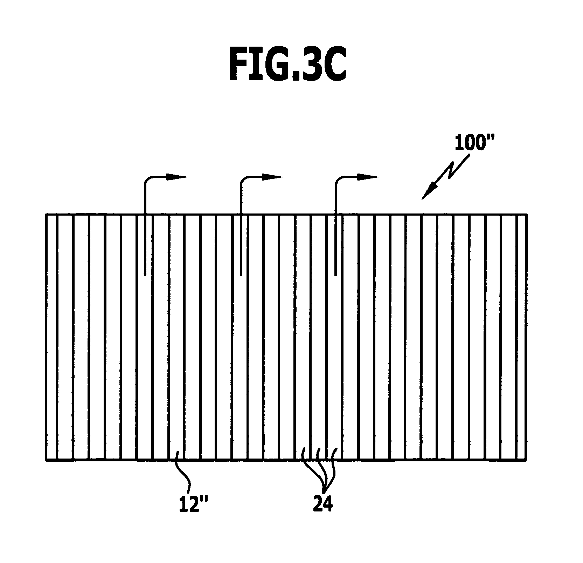

Die in den Figuren 3A, 3B und 3C schematisch dargestellte erste bevorzugte Ausführungsform des erfindungsgemäßen Rohmaterials 100" wurde unter Verwendung von Folien für die einen im Inneren des Rohmaterials liegenden Decklagen 12" hergestellt, welche vor dem Aufbringen auf die Faserlagen 10" beidseitig mit Entlüftungskanälen versehen wurden - dies kann durch Prägen der Folien oder zum Beispiel dadurch bewirkt werden, dass die Folien aus thermoplastischem Material durch Extrudieren erzeugt und dabei mit dem gewünschten Querschnittsprofil versehen wurden.

In den Figuren 3A und 3B sind derartige Decklagen 12" nur sehr schematisch dargestellt worden; sie besitzen bei dieser Ausführungsform einen wellenförmigen Querschnitt und weisen so beidseitig Entlüftungskanäle 24 auf, welche sich senkrecht zur Zeichnungsebene der Figuren 3A und 3B und in der in Figur 3C dargestellten Draufsicht vertikal erstrecken.

Hingegen wurden bei dieser Ausführungsform für die Decklagen 14" glatte Folien verwendet, die im zeichnerisch dargestellten Fall nicht perforiert sind, aber auch perforiert sein könnten.

Wie in Figur 3B durch übliche Pfeilsymbole und in Figur 3C durch Pfeile angedeutet wurde, kann zwischen einander benachbarten Decklagen 12" und 14" zunächst eingeschlossene Luft längs der Entlüftungskanäle 24 zu zwei einander gegenüberliegenden Rändern des Rohmaterials hin entweichen, und Gleiches gilt für zunächst vorhandene Lufteinschlüsse zwischen den Decklagen 12" und den Faserlagen 10" - der sich der Luft darbietende Strömungswiderstand ist in den Entlüftungskanälen 24 geringer als entlang einer Faserlage 10".

Im Übrigen gilt für die Herstellung der in den Figuren 3A, 3B und 3C dargestellten Ausführungsform dasselbe wie für die Herstellung der in den Figuren 2A, 2B und 2C dargestellten Ausführungsformen.

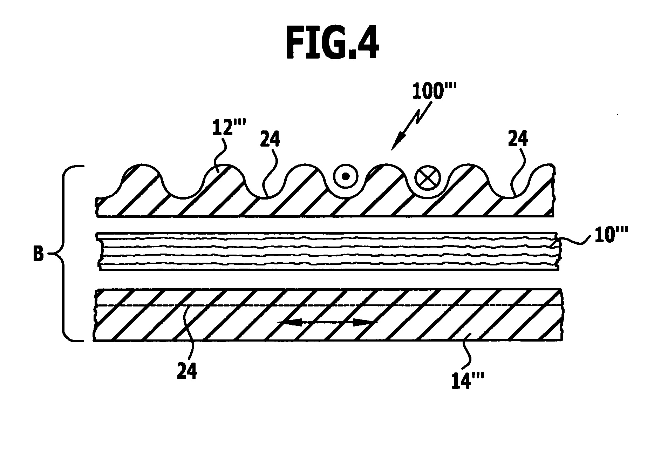

In Figur 4 ist eine zweite bevorzugte Ausführungsform des erfindungsgemäßen Flachmaterials 100 "' im Schnitt dargestellt, und zwar eine Schicht B eines erfindungsgemäßen Rohmaterials 100"', welche der Schicht B der ersten zeichnerisch dargestellten Ausführungsform des erfindungsgemäßen Rohmaterials entsprechen kann.

Bei der Ausführungsform gemäß Figur 4 werden Decklagen 12"' und 14"' von Beschichtungen aus thermoplastischem Material gebildet, welche auf die beiden Seiten einer Faserlage 10'" so aufgebracht, zum Beispiel aufgewalzt oder aufgespritzt, wurden, dass sich eine feste Verbindung zwischen den Beschichtungen, das heißt den Decklagen 12'" und 14"', und der Faserlage 10'" ergibt. Denkbar ist aber auch eine Herstellung der Decklagen 12'" und 14"' durch Aufpressen thermoplastischer Folien auf die Faserlage 10"'. Beim Aufwalzen thermoplastischen Materials zur Herstellung der Decklagen 12"' und 14"' können mit entsprechend konturierten Walzen gleichzeitig Entlüftungskanäle 24 in den von der Faserlage 10'" abgewandten Oberflächen der Decklagen 12'" und 14"' gebildet werden. Wird eine thermoplastische Beschichtungsmasse auf die Faserlage 10'" aufgespritzt, kann diese nachträglich mit einer insbesondere beheizbaren Prägewalze mit den Entlüftungskanälen 24 versehen werden. Werden die Decklagen 12'" und 14"' aus thermoplastischen Folien hergestellt, können einseitig mit den Entlüftungskanälen 24 versehene Folien verwendet oder die Entlüftungskanäle 24 nachträglich mit einer beheizten und entsprechend konturierten Walze in die Folien eingeprägt werden. In diesem Zusammenhang sei bemerkt, dass beim Aufpressen der die Decklagen 12' und 14' bildenden Folien auf die Faserlagen 10' sich Lufteinschlüsse zwischen diesen Folien und den Faserlagen schon gar nicht bilden können, zum einen wegen der Entlüftungsöffnungen 22 der Folien und zum anderen wegen der Gasdurchlässigkeit der Faserlagen 10' parallel zu den von diesen Faserlagen definierten Ebenen sowie quer zu diesen Ebenen. Bei der Ausführungsform gemäß Figur 4 müssen die Faserlagen nicht unbedingt luftdurchlässig sein.

Bei der in Figur 4 dargestellten Ausführungsform verlaufen auf der einen Seite des im Schnitt dargestellten Flachmaterials bzw. der Schicht B des erfindungsgemäßen Rohmaterials die Entlüftungskanäle 24 in einer anderen Richtung als auf der anderen Schichtseite - im zeichnerisch dargestellten Fall verlaufen die Entlüftungskanäle 24 der Decklage 12"' ungefähr senkrecht zur Zeichnungsebene der Figur 4, während die Entlüftungskanäle 24 der Decklage 14"' ungefähr parallel zur Zeichnungsebene der Figur 4 verlaufen. Unterschiedliche Kanallängsrichtungen bringen den Vorteil mit sich, dass, werden mehrere Schichten des in Figur 4 dargestellten Flachmaterials aufeinander gelegt und miteinander verbunden, die zwischen den Entlüftungskanälen 24 verlaufenden Erhebungen der einen Decklage nicht die Entlüftungskanäle der anderen Decklage einer benachbarten Schicht ganz oder teilweise verschließen können.

In Figur 4 wurde der Strömungsverlauf der abzuleitenden Luft wieder durch die üblichen Pfeilsymbole angedeutet.

## Patentansprüche

1. Mehrlagiges faserverstärktes Thermoplast-Flachmaterial (A; B; C) zur Herstellung eines für die Produktion faserverstärkter Thermoplast-Bauteile vorgesehenen mehrschichtigen Thermoplast-Rohmaterials (100"), von dessen miteinander verbundenen Schichten (A, B, C) mindestens eine von dem faserverstärkten Thermoplast-Flachmaterial gebildet wird, das eine Faserlage (10"; 10"') enthält, welche an mindestens einer ihrer Seiten mit einer mindestens überwiegend aus einem thermoplastischen Material bestehenden Decklage (12", 14"; 12"', 14"') beschichtet ist, **dadurch gekennzeichnet, dass** mindestens eine Decklage (12", 14"; 12"', 14"') aus einer Folie oder einer auf die Faserlage aufgetragenen Beschichtungsmasse öffnungslos und mindestens an ihrer von der Faserlage (10"; 10"') abgewandten Seite mit Entlüftungsmitteln in Form von zu mindestens einem Rand des Flachmaterials führenden Entlüftungskanälen (24) versehen ist.

2. Flachmaterial nach Anspruch 1, **dadurch gekennzeichnet, dass** die Entlüftungskanäle (24) die Gestalt von rinnenartigen Vertiefungen auf mindestens einer Seite der Decklage (12", 14"; 12"', 14"') haben.

3. Flachmaterial nach Anspruch 1 oder 2, **dadurch gekennzeichnet, dass** die Faserlage (10"; 10"') parallel zu einer von der Faserlage definierten Ebene sowie quer zu dieser Ebene mindestens überwiegend gasdurchlässig ist.

4. Flachmaterial nach einem der vorstehenden Ansprüche, **dadurch gekennzeichnet, dass** die Faserlage (10"; 10"') beidseitig mit einer mindestens überwiegend aus einem thermoplastischen Material bestehenden Decklage (12", 14"; 12"', 14"') beschichtet ist.

5. Flachmaterial nach Anspruch 4, **dadurch gekennzeichnet, dass** beide Decklagen (12", 14"; 12"', 14"') mit solchen Entlüftungsmitteln (24) versehen sind.

6. Flachmaterial nach Anspruch 4 oder 5, **dadurch gekennzeichnet, dass** die thermoplastischen Materialien der Decklagen (12", 14"; 12"', 14"') durch Erhitzen miteinander verklebbare oder verschweißbare Materialien sind.

7. Flachmaterial nach einem der vorstehenden Ansprüche, **dadurch gekennzeichnet, dass** die Decklage (12", 14"; 12"', 14"') mindestens an ihrer von der Faserlage (10"; 10"') abgewandten Seite mit die Entlüftungskanäle (24) bildenden Einprägungen versehen ist.

8. Aus mehreren Schichten des Flachmaterials nach einem der vorstehenden Ansprüche hergestelltes Rohmaterial, **dadurch gekennzeichnet, dass** alle im Rohmaterial (100"; 100"') gegeneinander anliegenden Decklagen (12", 14"; 12"', 14"') mit Entlüftungskanälen (24) versehen sind.

9. Verfahren zur Herstellung eines Flachmaterials nach einem der Ansprüche 1 bis 7, **dadurch gekennzeichnet, dass** zur Bildung einer Decklage eine Folie im erwärmten Zustand auf die benachbarte Faserlage aufgepresst wird.

10. Verfahren nach Anspruch 9, **dadurch gekennzeichnet, dass** eine beidseitig mit Entlüftungskanälen versehene Folie verwendet wird.

11. Verfahren zur Herstellung eines Flachmaterials nach einem der Ansprüche 1 bis 7, **dadurch gekennzeichnet, dass** zur Bildung einer Decklage auf die benachbarte Faserlage eine mindestens überwiegend aus einem thermoplastischen Material bestehende Beschichtung aufgetragen und auf ihrer von der Faserlage abgekehrten Seite mit einer Entlüftungskanäle bildenden Oberflächenstruktur versehen wird.

12. Verfahren zur Herstellung eines mehrere Schichten des Flachmaterials nach Anspruch 4 aufweisenden Rohmaterials, **dadurch gekennzeichnet, dass** die im Rohmaterial gegeneinander anliegenden Decklagen gegeneinander angelegt und im erhitzten Zustand miteinander verklebt oder verschweißt werden.

## Claims

1. Multilayer fibre-reinforced thermoplastic flat material (A; B; C) for the production of a multilayer thermoplastic raw material (100"), which is provided for the production of fibre-reinforced thermoplastic structural parts and of which at least one of the interconnected layers (A, B, C) is formed from the fibre-reinforced thermoplastic flat material containing a fibre layer (10"; 10"'), which is coated on at least one of its sides with a covering layer (12", 14"; 12"', 14"') at least predominantly consisting of a thermoplastic material, **characterised in that** there is provided at least one covering layer (12", 14"; 12"', 14"') of a film or of a covering substance applied to the fibre layer without gaps and at least on its side remote from the fibre layer (10"; 10"') with ventilation elements in the form of air channels (24) leading to at least one edge of the flat material.

2. Flat material according to claim 1, **characterised in that** the air channels (24) have the form of groove-like recesses on at least one side of the covering layer (12", 14"; 12"', 14"').

3. Flat material according to claim 1 or 2, **characterised in that** the fibre layer (10"; 10"') is at least predominantly gas-permeable parallel to a plane defined by the fibre layer and also transversely to this plane.

4. Flat material according to one of the preceding claims, **characterised in that** the fibre layer (10"; 10"') is coated on both sides with a covering layer (12", 14"; 12"', 14"') at least predominantly consisting of a thermoplastic material.

5. Flat material according to claim 4, **characterised in that** both covering layers (12", 14"; 12"', 14"') are provided with such ventilation elements (24).

6. Flat material according to claim 4 or 5, **characterised in that** the thermoplastic materials of the covering layers (12", 14"; 12"', 14"') are materials, which can be adhered or welded to one another by heating.

7. Flat material according to one of the preceding claims, **characterised in that** the covering layer (12", 14"; 12"', 14"') is provided with stamped sections forming the air channels (24) at least on its side remote from the fibre layer (10"; 10"').

8. Raw material produced from multiple layers of the flat material according to one of the preceding claims, **characterised in that** all the covering layers (12", 14"; 12"', 14"') abutting against one another in the raw material (100"; 100"') are provided with air channels (24).

9. Process for the production of a flat material according to one of claims 1 to 7, **characterised in that** to form a covering layer a film is pressed onto the adjacent fibre layer in heated state.

10. Process according to claim 9, **characterised in that** a film provided with air channels on both sides is used.

11. Process for the production of a flat material according to one of claims 1 to 7, **characterised in that** to form a covering layer a coating at least predominantly consisting of a thermoplastic material is applied onto the adjacent fibre layer and is provided with a surface structure forming air channels on its side remote from the fibre layer.

12. Process for the production of a raw material having multiple layers of the flat material according to claim 4, **characterised in that** the covering layers abutting against one another in the raw material are laid against one another and are adhered or welded to one another in heated state.

## Revendications

1. Matériau plat (A ; B ; C) thermoplastique multistrate renforcé par des fibres, pour la fabrication d'un matériau brut (100") thermoplastique multicouche destiné à la production de pièces thermoplastiques renforcées par des fibres, au moins une des couches (A, B, C) mutuellement assemblées dudit matériau brut étant formée par le matériau plat thermoplastique renforcé par des fibres, lequel contient une strate de fibres (10" ; 10"') qui est revêtue sur au moins un de ses côtés d'une strate de recouvrement (12", 14" ; 12"', 14"') constituée au moins majoritairement d'un matériau thermoplastique, **caractérisé en ce qu'**au moins une strate de recouvrement (12", 14" ; 12"', 14"'), constituée d'un film ou d'une masse de revêtement appliquée sur la strate de fibres, est dotée, sans ouvertures et au moins sur son côté opposé à la strate de fibres (10" ; 10"'), de moyens de ventilation sous la forme de canaux de ventilation (24) menant à au moins un bord du matériau plat.

2. Matériau plat selon la revendication 1, **caractérisé en ce que** les canaux de ventilation (24) ont la forme de renforcements du genre rigoles sur au moins un côté de la strate de recouvrement (12", 14" ; 12"', 14"').

3. Matériau plat selon la revendication 1 ou 2, **caractérisé en ce que** la strate de fibres (10" ; 10"') est au moins majoritairement perméable aux gaz parallèlement à un plan défini par la strate de fibres ainsi que transversalement à ce plan.

4. Matériau plat selon l'une quelconque des revendications précédentes, **caractérisé en ce que** la strate de fibres (10" ; 10"') est revêtue des deux côtés d'une strate de recouvrement (12", 14" ; 12"', 14"') constituée au moins majoritairement d'un matériau thermoplastique.

5. Matériau plat selon la revendication 4, **caractérisé en ce que** les deux strates de recouvrement (12", 14" ; 12"', 14"') sont dotées de canaux de ventilation (24) du type précité.

6. Matériau plat selon la revendication 4 ou 5, **caractérisé en ce que** les matériaux thermoplastiques des strates de recouvrement (12", 14" ; 12"', 14"') sont des matériaux qui peuvent être collés ou soudés entre eux en les chauffant.

7. Matériau plat selon l'une quelconque des revendications précédentes, **caractérisé en ce que** la strate de recouvrement (12", 14" ; 12"', 14"') est dotée, au moins sur son côté opposé à la strate de fibres (10" ; 10"'), de régions repoussées formant les canaux de ventilation (24).

8. Matériau brut fabriqué à partir de plusieurs couches du matériau plat selon l'une quelconque des revendications précédentes, **caractérisé en ce que** toutes les strates de recouvrement (12", 14" ; 12"', 14"') appliquées les unes contre les autres dans le matériau brut (100" ; 100"') sont pourvues de canaux de ventilation (24).

9. Procédé de fabrication d'un matériau plat selon l'une quelconque des revendications 1 à 7, **caractérisé en ce que**, pour former une strate de recouvrement, un film est pressé à l'état chauffé sur la strate de fibres voisine.

10. Procédé selon la revendication 9, **caractérisé en ce qu'**on utilise un film pourvu des deux côtés de canaux de ventilation.

11. Procédé de fabrication d'un matériau plat selon l'une quelconque des revendications 1 à 7, **caractérisé en ce que**, pour former une strate de recouvrement, un revêtement constitué au moins majoritairement d'un matériau thermoplastique est appliqué sur la strate de fibres voisine et est doté, sur son côté opposé à la strate de fibres, d'une structure de surface formant des canaux de ventilation.

12. Procédé de fabrication d'un matériau brut comportant plusieurs couches du matériau plat selon la revendication 4, **caractérisé en ce que** les strates de recouvrement appliquées les unes contre les autres dans le matériau brut sont placées les unes contre les autres et assemblées entre elles par collage ou soudage à l'état chauffé.
